# EUROPEAN PATENT APPLICATION

(11) **EP 4 819 288 A1**
(43) Date of publication of application: **07.10.2026**
(21) Application number: 26165058.4
(22) Date of filing: 16.03.2026
(51) Int. Cl.: H01M 10/0583, H01M 50/103, H01M 50/466, H01M 10/04

(54) **SECONDARY BATTERY AND METHOD OF MANUFACTURING SAME**

(30) Priority: 04.04.2025 JP 2025062379
(71) Applicant: Prime Planet Energy & Solutions, Inc., Chuo-ku, Tokyo 103-0022 (JP)
(72) Inventor: MAEDA, Tomonori, Tokyo,, 103-0022 (JP)
(74) Representative: Kuhnen & Wacker Patent- und Rechtsanwaltsbüro PartG mbB

(57) **Abstract**

A secondary battery (1) includes: an electrode assembly (200) including a first electrode (210) and a second electrode (220); and an exterior container (100) that accommodates the electrode assembly (200). A separator (230) of the electrode assembly (200) has a folded portion (231, 232) extending in a form of a strip in a first direction in a vicinity of at least one of a pair of first end sides (101) in a first surface (111) of the exterior container (100), the folded portion (231, 232) is provided to face a second surface (112) of the exterior container (100) orthogonal to the first surface (111).

## Description

### CROSS REFERENCE TO RELATED APPLICATIONS

This nonprovisional application is based on Japanese Patent Application No. 2025-062379 filed on April 4, 2025 with the Japan Patent Office, the entire contents of which are hereby incorporated by reference.

### BACKGROUND OF THE INVENTION

### Field of the Invention

The present technology relates to a secondary battery and a method of manufacturing the secondary battery.

### Description of the Background Art

Japanese Patent Laying-Open No. 2013-084387 discloses a battery in which a separator is provided with a regulation portion that is in contact with an end portion of a positive electrode or a negative electrode so as to regulate movement of the positive electrode or the negative electrode in a direction perpendicular to a stacking direction.

### SUMMARY OF THE INVENTION

It has been required to suppress precipitation of metal in a secondary battery. A redundant portion of a separator included in an electrode assembly may have an unintended influence on the electrode assembly. From this viewpoint, there is still room for improvement in a conventional secondary battery.

An object of the present technology is to provide: a secondary battery in which precipitation of metal is suppressed; and a method of manufacturing the secondary battery.

The present technology provides the following secondary battery and the following method of manufacturing the secondary battery.
[1] A secondary battery comprising: an electrode assembly including a first electrode, a second electrode having a polarity different from a polarity of the first electrode, and a separator provided between the first electrode and the second electrode; and an exterior container that has a prismatic shape and that accommodates the electrode assembly, wherein the exterior container has a pair of first surfaces, a pair of second surfaces substantially orthogonal to the first surfaces, and a pair of third surfaces substantially orthogonal to the first surfaces and the second surfaces, and an area of each of the first surfaces is larger than each of an area of each of the second surfaces and an area of each of the third surfaces, the first surface has a substantially rectangular shape including a pair of first end sides each extending in a first direction and a pair of second end sides each extending in a second direction substantially orthogonal to the first direction, the electrode assembly has a first main surface and a second main surface that respectively face the pair of first surfaces, and the separator has a folded portion extending in a form of a strip in the first direction in a vicinity of at least one of the pair of first end sides, and the folded portion is provided to face a corresponding one of the second surfaces of the exterior container.
[2] The secondary battery according to [1], wherein the folded portion is provided in a vicinity of each of the pair of first end sides.
[3] The secondary battery according to [1] or [2], wherein the separator includes an outer peripheral portion provided outside the first electrode and the second electrode, the outer peripheral portion has a redundant portion that reaches an edge end of the second main surface from an edge end of the first main surface of the electrode assembly and that has a creepage distance longer than a shortest distance from the edge end of the first main surface to the edge end of the second main surface in the first direction, and the folded portion is formed by bending the redundant portion.
[4] The secondary battery according to any one of [1] to [3], wherein the pair of first end sides are long sides.
[5] The secondary battery according to any one of [1] to [4], wherein the electrode assembly has an electrode tab at a position facing each of the pair of second end sides.
[6] The secondary battery according to any one of [1] to [5], wherein the electrode assembly is a stacked type electrode assembly.
[7] The secondary battery according to [6], wherein the separator is folded in a meandering manner.
[8] A method of manufacturing a secondary battery, the method comprising: preparing an electrode assembly that has a first main surface and a second main surface and that includes a first electrode, a second electrode having a polarity different from a polarity of the first electrode, and a separator provided between the first electrode and the second electrode; and accommodating the electrode assembly into an exterior container, wherein the exterior container has a prismatic shape, and has a pair of first surfaces, a pair of second surfaces substantially orthogonal to the first surfaces, and a pair of third surfaces substantially orthogonal to the first surfaces and the second surfaces, and an area of each of the first surfaces is larger than each of an area of each of the second surfaces and an area of each of the third surfaces, the first surface has a substantially rectangular shape including a pair of first end sides each extending in a first direction and a pair of second end sides each extending in a second direction substantially orthogonal to the first direction, the preparing the electrode assembly includes bending the separator so as to form a folded portion extending in a form of a strip in the first direction in a vicinity of at least one of the pair of first end sides, and the accommodating the electrode assembly into the exterior container includes inserting the electrode assembly into the exterior container such that the first main surface and the second main surface face the pair of first surfaces respectively and the folded portion faces a corresponding one of the second surfaces.
[9] The method of manufacturing the secondary battery according to [8], further comprising bending an insulating member disposed outside the electrode assembly, wherein when bending the insulating member, the folded portion is formed.
[10] The method of manufacturing the secondary battery according to [9], further comprising bending the separator before bending the insulating member.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to an embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a perspective view showing a state of attaching a sealing plate to a current collector on the positive electrode side.
Fig. 12 is a perspective view showing the configuration of the secondary battery.
Fig. 13 is a diagram of the secondary battery and an inter-cell separator adjacent to the secondary battery as viewed in a stacking direction.
Fig. 14 is a cross sectional view showing an electrode assembly before a separator is bent.
Fig. 15 is a cross sectional view showing the electrode assembly with the separator being bent.
Fig. 16 is a cross sectional view showing a modification of the electrode assembly with the separator being bent.
Fig. 17 is a cross sectional view showing a first stage of a step of bending the separator in a process of manufacturing the electrode assembly shown in Fig. 15.
Fig. 18 is a cross sectional view showing a second stage of the step of bending the separator as being subsequent to Fig. 17.
Fig. 19 is a cross sectional view showing a first stage of a modification of the step of bending the separator in the process of manufacturing the modification of the electrode assembly shown in Fig. 16.
Fig. 20 is a cross sectional view showing a second stage of the modification of the step of bending the separator as being subsequent to Fig. 18.
Fig. 21 is a diagram for illustrating a relation between the thickness of the electrode assembly and the creepage distance of the separator.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

Moreover, sizes such as width, length, and diameter of each member illustrated in the present specification are not limited to those shown in the figures, and can be appropriately changed. In the present specification, ordinal numbers such as "first" and "second" may be given to respective configurations, but these ordinal numbers do not limit priority, order, or the like unless explicitly defined.

In the present specification, the term "battery" is not limited to a lithium ion battery, and may include other batteries such as a nickel-metal hydride battery and a sodium-ion battery. **In** the present specification, the term "electrode" may collectively represent a positive electrode and a negative electrode. Further, the term "electrode plate" may collectively represent a positive electrode plate and a negative electrode plate.

In the present specification, the "battery" can be mounted on vehicles such as a hybrid electric vehicle (HEV), a plug-in hybrid electric vehicle (PHEV), and a battery electric vehicle (BEV). It should be noted that the use of the "battery" is not limited to the use in a vehicle.

In the present specification, the X direction (first direction) may be referred to as a "width direction" of each of the secondary battery, the electrode assembly, and the case main body, the Z direction (second direction) may be referred to as a "height direction" of the secondary battery, the electrode assembly, and the case main body, and the Y direction (third direction) may be referred to as a "thickness direction" of the secondary battery, the electrode assembly, and the case main body.

### (Overall Configuration of Secondary Battery)

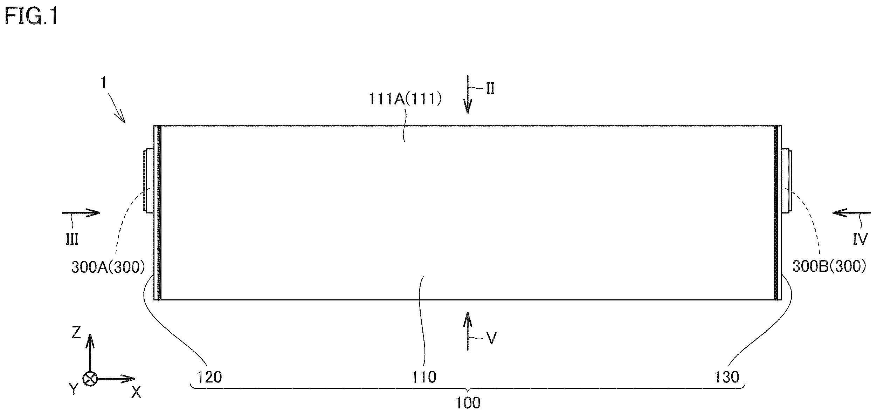

The overall configuration of a secondary battery 1 will be described with reference to Figs. 1 to 6. Secondary battery 1 includes a case 100 (exterior container), an electrode assembly 200, electrode terminals 300, and current collectors 400. Case 100 includes a case main body 110, a sealing plate 120, and a sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 including case 100 having a prismatic shape is obtained. Case main body 110 is composed of a metal. Specifically, case main body 110 is composed of aluminum, an aluminum alloy, iron, an iron alloy, or the like.

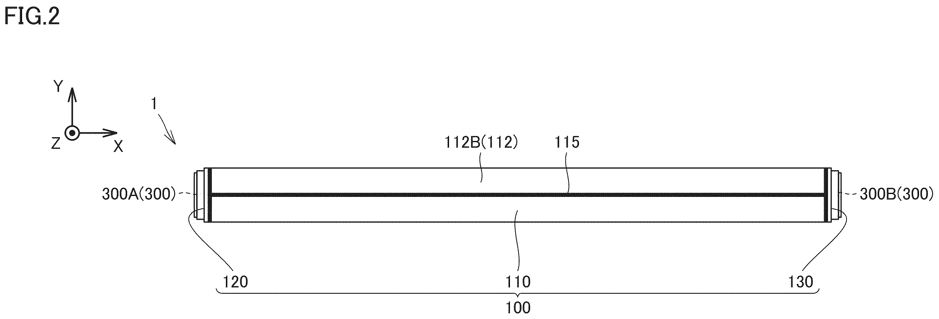

As shown in Figs. 1 and 2, sealing plate 120 and sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, energy ray application such as laser welding is favorable). Each of the corners of the "prismatic tubular shape" may have a shape with a curvature.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 300 mm or more. In this way, secondary battery 1 can be formed to have a relatively large size (high capacity). The size (height) of case main body 110 in the Z direction is preferably about 100 mm or less. Thus, (low-height) secondary battery 1 having a relatively low height can be formed, thus resulting in improved ease of mounting on a vehicle, for example. However, the sizes of secondary battery 1 are not limited to the above ranges.

Case main body 110 includes first side surface portions 111 (first surfaces) and second side surface portions 112 (second surfaces). First side surface portions 111 are constituted of a pair of first side surface portions 111A, 111B, whereas second side surface portions 112 are constituted of a pair of second side surface portions 112A, 112B. First side surface portions 111A, 111B constitute parts of the side surfaces of case 100. The pair of second side surface portions 112A, 112B constitute the bottom surface portion and upper surface portion of case 100. First side surface portions 111 and second side surface portions 112 are provided to intersect each other. First side surface portions 111 and second side surface portions 112 are connected at their respective end portions.

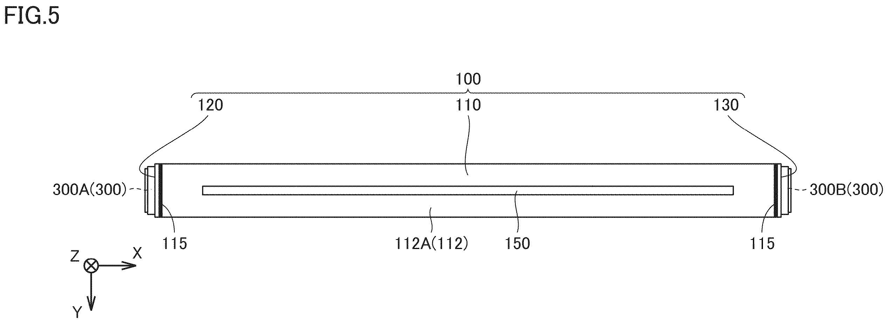

As shown in Fig. 5, a gas-discharge valve 150 is provided in one second side surface portion 112A of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of second side surface portions 112. Joining portion 115 extends in the width direction (X direction) of secondary battery 1. At joining portion 115, the end sides of the plate-shaped member constituting case main body 110 are joined to each other.

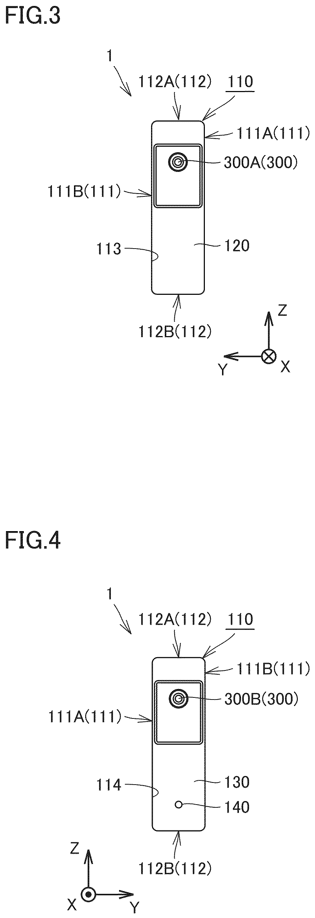

As shown in Fig. 3, an opening 113 (first opening) is provided at an end portion of case main body 110 on one side in the first direction (X direction). Opening 113 is sealed by sealing plate 120 (first sealing plate). Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

A negative electrode terminal 300A is provided on sealing plate 120. The position of negative electrode terminal 300A can be appropriately changed.

As shown in Fig. 4, an opening 114 (second opening) is provided at an end portion of case main body 110 on the other side in the X direction. That is, opening 114 is located at an end portion opposite to opening 113, and openings 113 and 114 face each other. Opening 114 is sealed by sealing plate 130 (second sealing plate). Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 is provided with a positive electrode terminal 300B and an injection hole 140. The positions of positive electrode terminal 300B and injection hole 140 can be appropriately changed. Injection hole 140 is sealed by a sealing member (not shown). As the sealing member, for example, a blind rivet or another metal member can be used.

Each of sealing plate 120 and sealing plate 130 is composed of a metal. Specifically, each of sealing plate 120 and sealing plate 130 is composed of aluminum, an aluminum alloy, iron, an iron alloy, or the like.

Sealing plates 120, 130 (third surfaces) constitute parts of case 100. Sealing plates 120, 130 are provided to intersect (provided to be substantially orthogonal to) first side surface portions 111 and second side surface portions 112.

In case 100, the area (first area) of each of the pair of first side surface portions 111 (first surfaces) is larger than each of the area (second area) of each of the pair of second side surface portions 112 (second surfaces) and the area (third area) of each of sealing plates 120, 130 (third surfaces).

Negative electrode terminal 300A is electrically connected to a negative electrode of electrode assembly 200. Negative electrode terminal 300A is attached to sealing plate 120, i.e., case 100. Positive electrode terminal 300B is electrically connected to a positive electrode of electrode assembly 200. Positive electrode terminal 300B is attached to sealing plate 130, i.e., case 100.

Negative electrode terminal 300A is composed of a conductive material (more specifically, a metal), and may be composed of, for example, copper or a copper alloy. Positive electrode terminal 300B is composed of a conductive material (more specifically, a metal), and may be composed of, for example, aluminum or an aluminum alloy.

In the present embodiment, electrode assembly 200 is an electrode assembly having a flat shape and having a below-described negative electrode plate 210 and a below-described positive electrode plate 220 stacked on each other. Specifically, electrode assembly 200 is a stacked type electrode assembly in which a plurality of negative electrode plates 210 and a plurality of positive electrode plates 220 are alternately stacked with a separator being interposed therebetween. The separator is formed by folding a strip-shaped insulating sheet member in a meandering manner.

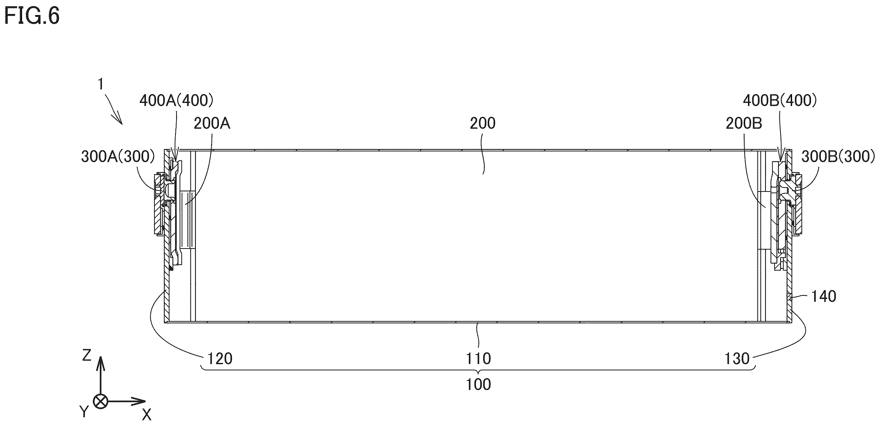

As shown in Fig. 6, case 100 accommodates electrode assembly 200. Electrode assembly 200 is accommodated in case 100 such that the long-side direction thereof is parallel to the X direction. Specifically, one or a plurality of the stacked type electrode assemblies and an electrolyte solution (electrolyte) (not shown) are accommodated in case 100. As the electrolyte solution (non-aqueous electrolyte solution), it is possible to use, for example, a solution obtained by dissolving LiPF₆ in a non-aqueous solvent. Instead of the electrolyte solution, a solid electrolyte may be used.

Electrode assembly 200 includes a main body portion having a substantially rectangular shape, a negative electrode tab group 200A, and a positive electrode tab group 200B.

The main body portion is constituted of below-described negative electrode plate 210 and below-described positive electrode plate 220. Negative electrode tab group 200A is located at an end portion of electrode assembly 200 on one side (the sealing plate 120 side) with respect to the main body portion thereof in the X direction. Positive electrode tab group 200B is located at an end portion of electrode assembly 200 on the other side (the sealing plate 130 side) with respect to the main body portion thereof in the X direction.

Each of negative electrode tab group 200A and positive electrode tab group 200B is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 300A and positive electrode terminal 300B through current collectors 400.

Negative electrode current collector 400A is disposed on sealing plate 120 with an insulating member composed of a resin being interposed therebetween. Negative electrode current collector 400A is electrically connected to negative electrode tab group 200A and negative electrode terminal 300A. Negative electrode current collector 400A is composed of a conductive material (more specifically, a metal), and can be composed of copper, a copper alloy, or the like, for example.

Positive electrode current collector 400B is disposed on sealing plate 130 with an insulating member composed of a resin being interposed therebetween. Positive electrode current collector 400B is electrically connected to positive electrode tab group 200B and positive electrode terminal 300B. Positive electrode current collector 400B is composed of a conductive material (more specifically, a metal), and can be composed of aluminum, an aluminum alloy, or the like, for example. Positive electrode tab group 200B may be electrically connected to sealing plate 130 directly or via positive electrode current collector 400B. In this case, sealing plate 130 may serve as positive electrode terminal 300B.

### (Configuration of Electrode Assembly 200)

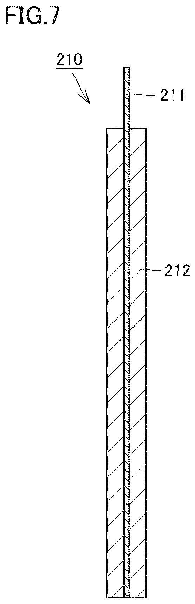

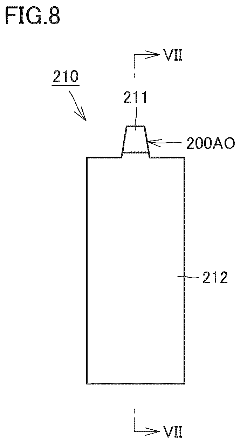

As shown in Figs. 7 and 8, negative electrode plate 210 (first electrode) includes a negative electrode core body 211 and a negative electrode active material layer 212. A negative electrode tab 200A0 constituted of negative electrode core body 211 is provided at one end portion, in the width direction, of negative electrode plate 210. When negative electrode plates 210 are stacked, a plurality of negative electrode tabs 200A0 are stacked to form negative electrode tab group 200A. Negative electrode tab group 200A is electrically connected to the negative electrode. The length of each of negative electrode tabs 200A0 in the plurality of negative electrode plates 210 in the protruding direction is appropriately adjusted in consideration of the state in which negative electrode tab group 200A is connected to negative electrode current collector 400A. The shape of negative electrode tab 200A0 is not limited to the one illustrated in Fig. 8.

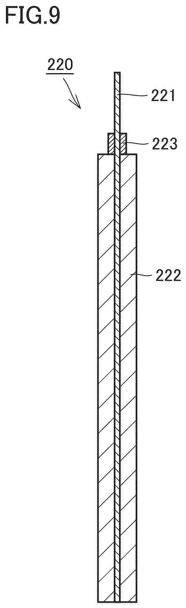

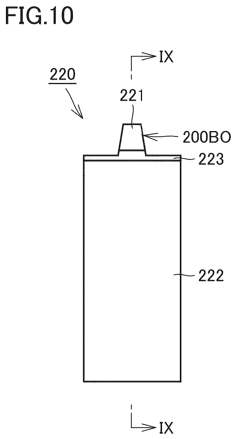

As shown in Figs. 9 and 10, positive electrode plate 220 (second electrode) includes a positive electrode core body 221, a positive electrode active material layer 222, and a positive electrode protective layer 223. A positive electrode tab 200B0 constituted of positive electrode core body 221 is provided at one end portion, in the width direction, of positive electrode plate 220. When positive electrode plates 220 are stacked, a plurality of positive electrode tabs 200B0 are stacked to form positive electrode tab group 200B. Positive electrode tab group 200B is electrically connected to the positive electrode. The length of each of positive electrode tabs 200B0 in the plurality of positive electrode plates 220 in the protruding direction is appropriately adjusted in consideration of the state in which positive electrode tab group 200B is connected to positive electrode current collector 400B. The shape of positive electrode tab 200B0 is not limited to the one illustrated in Fig. 10.

Positive electrode protective layer 223 is provided at the root of positive electrode tab 200B0. Positive electrode protective layer 223 may not necessarily be provided at the root of positive electrode tab 200B0.

### (Accommodation of Electrode Assembly 200)

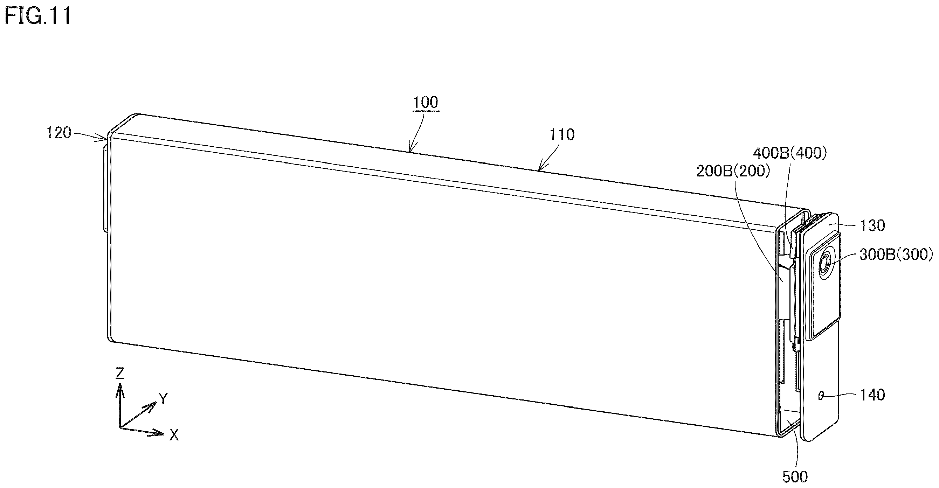

Electrode assembly 200 is inserted into case main body 110 from opening 113 with the positive electrode tab group 200B side being inserted first. As shown in Fig. 11, a spacer 500 is provided between electrode assembly 200 and sealing plate 130 located on the positive electrode side. A spacer 500 is also provided between electrode assembly 200 and sealing plate 120 located on the negative electrode side in the same manner as on the positive electrode side.

Before inserting electrode assembly 200 into case main body 110, electrode assembly 200 and negative electrode terminal 300A may be electrically connected to each other. After electrode assembly 200 is inserted into case main body 110, electrode assembly 200 is electrically connected to positive electrode terminal 300B.

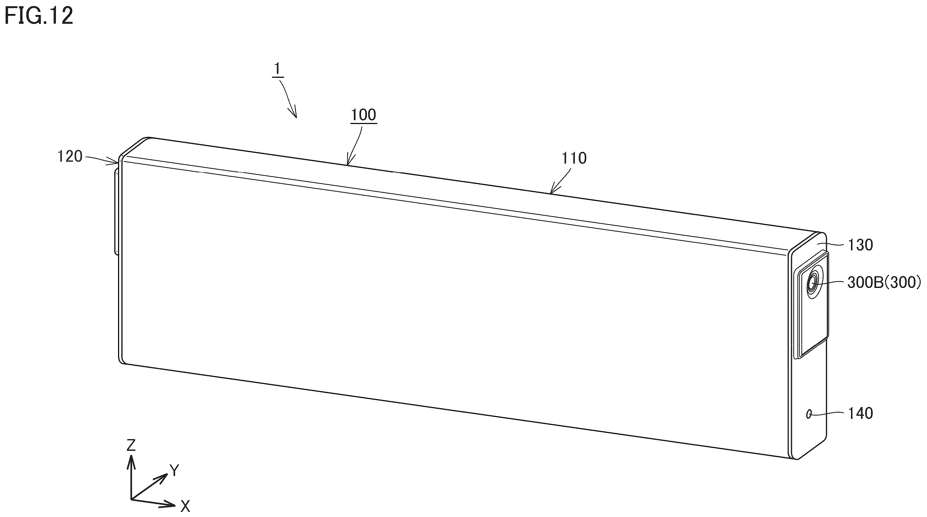

After electrode assembly 200 is inserted into case main body 110, sealing plate 120 and sealing plate 130 are joined to case main body 110 as shown in Fig. 12. Sealing plate 120 seals opening 113 of case main body 110, and sealing plate 130 seals opening 114 of case main body 110. In this way, electrode assembly 200 is accommodated in case main body 100.

### (Configuration of Battery Assembly)

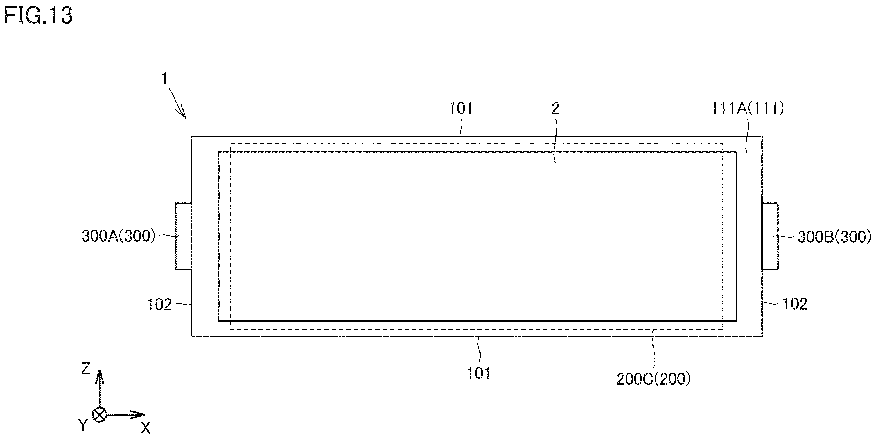

As shown in Fig. 13, first side surface portion 111 of case main body 110 has a substantially rectangular shape including a pair of first end sides 101 each extending in the X direction and a pair of second end sides 102 each extending in the Z direction. Here, each of the pair of first end sides 101 is longer than each of the pair of second end sides 102. That is, first side surface portion 111 has a substantially rectangular shape in which the X direction corresponds to the long-side direction thereof and the Z direction corresponds to the short-side direction thereof.

When forming a battery assembly, a plurality of secondary batteries 1 are arranged side by side in the Y direction. An inter-cell separator 2 is provided between the plurality of secondary batteries 1. As shown in Fig. 13, as viewed in the Y direction, the area of inter-cell separator 2 is smaller than the area of first side surface portion 111 of case main body 110. The height of inter-cell separator 2 is lower than the height of main body portion 200C (substantially rectangular portion other than the electrode tabs) of electrode assembly 200.

Therefore, a portion that does not overlap inter-cell separator 2 is formed at the upper and lower end portions (in the vicinity of the pair of first end sides 101) of electrode assembly 200, with the result that a pressure load by inter-cell separator 2 is likely to be relatively small. As described later, electrode assembly 200 according to the present embodiment has such a configuration of a separator 230 that suppresses decreased pressure load in the vicinity of each of first end sides 101.

### (Configuration of Separator 230)

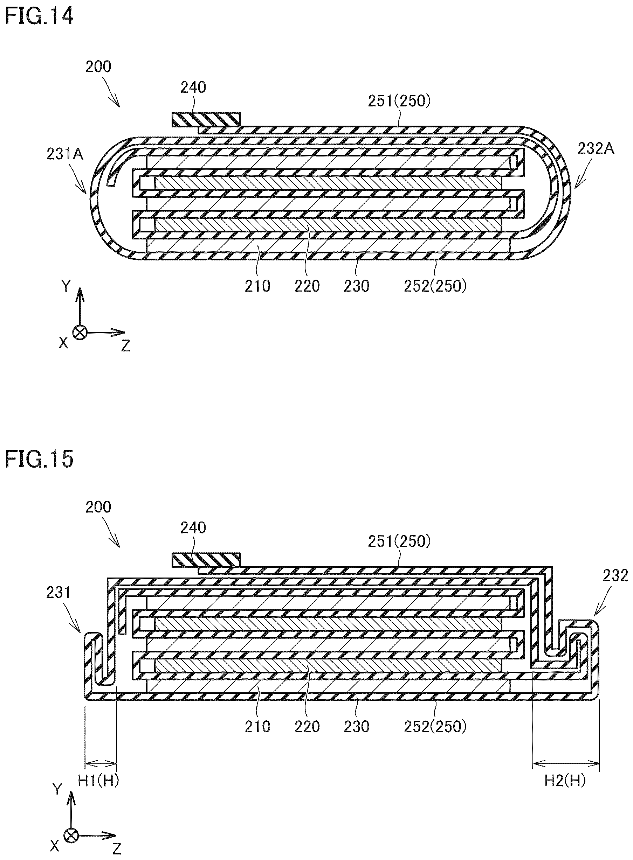

As shown in Fig. 14, electrode assembly 200 includes negative electrode plate 210 and positive electrode plate 220 having polarities different from each other, separator 230, and a tape 240. Separator 230 is provided between negative electrode plate 210 and positive electrode plate 220.

Separator 230 is a member that insulates negative electrode plate 210 and positive electrode plate 220 from each other. Separator 230 is composed of, for example, a porous resin sheet composed of a polyolefin resin such as polyethylene (PE) or polypropylene (PP). The porous resin sheet may have a single-layer structure or a multilayer structure (for example, a three-layer structure of PP/PE/PP).

An adhesive layer is preferably provided on a surface of separator 230. The adhesive layer includes, for example, an adhesive resin such as an acrylic-based resin or polyvinylidene difluoride. Since separator 230 has the adhesive layer, a stacking deviation between each of negative electrode plate 210 and positive electrode plate 220 and separator 230 can be readily suppressed. The adhesive layer may be provided on the entire surface of separator 230, or may be applied in the form of a pattern on the surface of separator 230.

A heat-resistant layer including ceramic particles may be provided on the surface of separator 230. The heat-resistant layer preferably includes a resin binder. This allows the heat-resistant layer to function as the adhesive layer.

Electrode assembly 200 has main surfaces 250 facing first side surface portions 111 (first surface) of case main body 110. A main surface 251 (first main surface) and a main surface 252 (second main surface) face first side surface portions 111A, 111B, respectively.

The end portion (first end portion) of separator 230 on the winding end side is fixed on main surface 251 by tape 240.

Separator 230 includes a portion folded in a meandering manner between negative electrode plate 210 and positive electrode plate 220, and an outer peripheral portion (outer surface portion) provided to surround the outer sides of negative electrode plate 210 and positive electrode plate 220. However, the shape of separator 230 is not limited to the one described above, and the portion provided between negative electrode plate 210 and positive electrode plate 220 and the outer peripheral portion surrounding the outer sides of negative electrode plate 210 and positive electrode plate 220 may be separately provided. The portion provided between negative electrode plate 210 and positive electrode plate 220 is not limited to the portion in which separator 230 having the strip shape is folded in the meandering manner, and separators each having a rectangular shape may be individually provided one by one.

As shown in Fig. 14, the outer peripheral portion of separator 230 has redundant portions 231A, 232A at its both end portions in the Z direction. Each of end portions of separator 230 in the X direction may be opened or may be closed in the form of a pouch.

In an example of Fig. 15, separator 230 has folded portions 231, 232 each extending in the form of a strip in the X direction in the vicinity of the pair of first end sides 101. Folded portions 231, 232 shown in Fig. 15 are formed by folding redundant portions 231A, 232A shown in Fig. 14. Folded portions 231, 232 are preferably formed across the entire length of main body portion 200C of electrode assembly 200 in the X direction. However, folded portions 231, 232 may be formed in a portion of main body portion 200C of electrode assembly 200 in the X direction. In this case, folded portions 231, 232 are preferably formed across about 1/2 or more (more preferably, about 2/3 or more) of the length of main body portion 200C of electrode assembly 200.

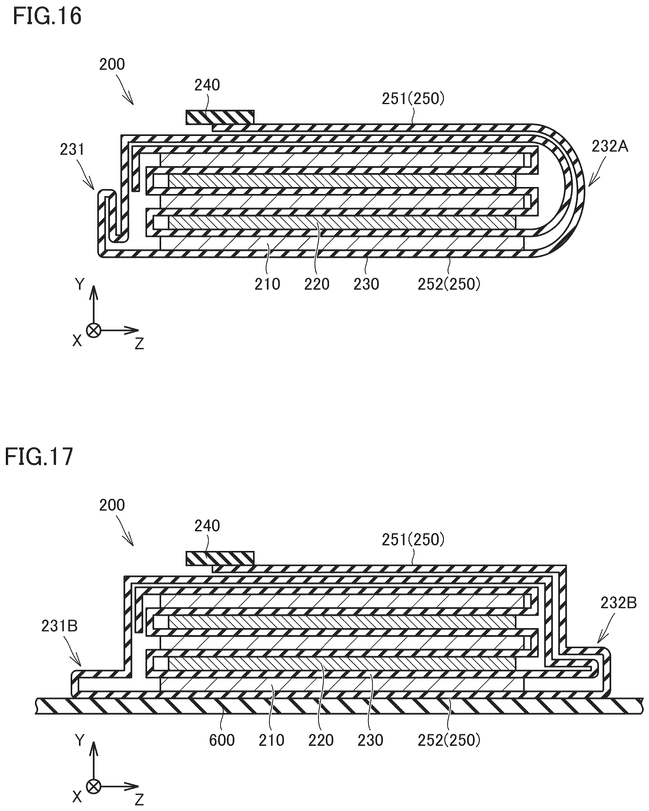

In a modification of Fig. 16, separator 230 has a folded portion 231 extending in the form of a strip in the X direction in the vicinity of first end side 101 on the -Z side of the pair of first end sides 101. Folded portion 231 shown in Fig. 16 is formed by folding redundant portion 231A of Fig. 14.

Each of folded portions 231, 232 is provided to face second side surface portion 112 of case main body 110. Folded portions 231, 232 are separated from main surfaces 251, 252 and are not overlapped with negative electrode plate 210 and positive electrode plate 220.

In each of the examples of Figs. 15 and 16, folded portions 231, 232 are provided at positions away from negative electrode plate 210 and positive electrode plate 220 in the Z direction. In each of folded portions 231, 232, a plurality of layers of separator 230 surrounding negative electrode plate 210 and positive electrode plate 220 are overlapped.

Specifically, in the example of Fig. 15, three layers of separator 230 are stacked in folded portion 231, and six layers of separator 230 are stacked in folded portion 232. In each of folded portions 231, 232, three or more layers of separator 230 are preferably stacked.

In the examples of Figs. 15 and 16, the end portion (second end portion) of separator 230 on the winding start side may be located inside folded portion 231. In the example of Fig. 15, two substantially U-shaped portions (portions folded by about 180°) are formed in folded portion 232, and one substantially U-shaped portion is located in the other substantially U-shaped portion.

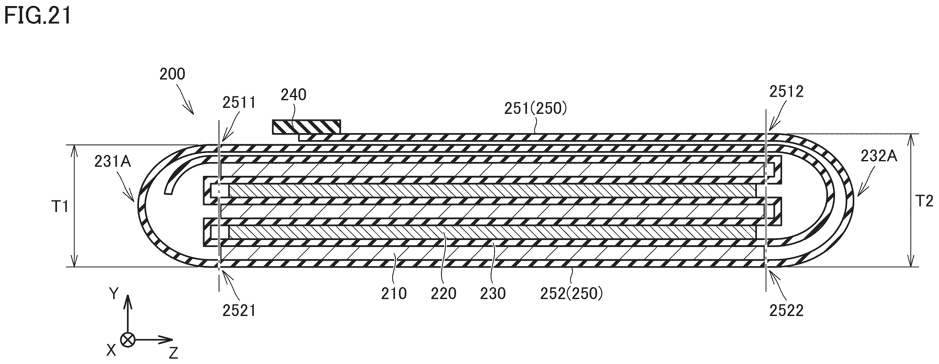

Each of amounts of stacking (H1, H2 in Fig. 15) of separator 230 in folded portions 231, 232 preferably corresponds to the thickness of about 2 or more and 16 or less sheet materials constituting separator 230. A ratio (H/T2) of the amount of stacking in each of folded portions 231, 232 to the thickness (T2 in Fig. 21) of electrode assembly 200 is preferably about 0.1% or more, more preferably about 0.2% or more, and further preferably about 0.25% or more. Moreover, H/T2 is preferably about 2.0% or less, more preferably about 1.0% or less, and further preferably about 0.5% or less.

In the example of Fig. 15, folded portions 231, 232 are provided in the vicinity of the pair of first end sides 101. In the example of Fig. 16, folded portion 231 is formed only in the vicinity of first end side 101 on the -Z side of the pair of first end sides 101. Folded portion 232 may be formed only in the vicinity of first end side 101 on the +Z side of the pair of first end sides 101.

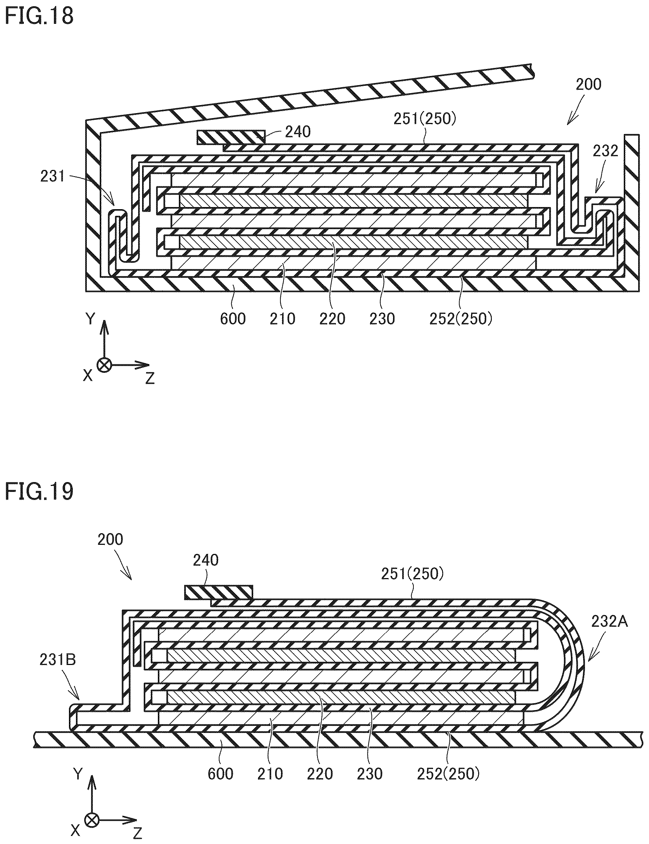

A method of forming electrode assembly 200 shown in Fig. 15 will be described with reference to Figs. 17 and 18. An electrode assembly holder 600 (insulating member) is disposed outside electrode assembly 200.

As shown in Fig. 17, in a first stage (stage prior to bending electrode assembly holder 600) of a step of bending electrode assembly holder 600, bent portions 231B, 232B of separator 230 are formed. As shown in Fig. 18, in a second stage of the step of bending electrode assembly holder 600, bent portions 231B, 232B are further bent to form folded portions 231, 232. In this way, folded portions 231, 232 of separator 230 can be formed when bending electrode assembly holder 600.

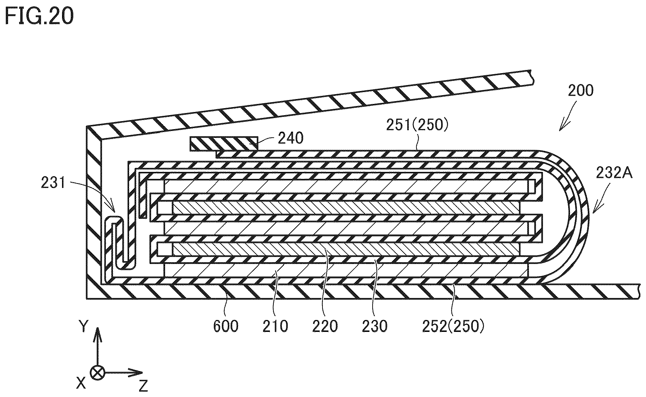

A method of forming the modification of electrode assembly 200 shown in Fig. 16 will be described with reference to Figs. 19 and 20. Also in this modification, electrode assembly holder 600 (insulating member) is disposed outside electrode assembly 200.

As shown in Fig. 19, in the first stage (stage prior to bending electrode assembly holder 600) of the step of bending electrode assembly holder 600, bent portion 231B of separator 230 is formed. As shown in Fig. 20, in the second stage of the step of bending electrode assembly holder 600, bent portion 231B is further bent to form folded portion 231. In this way, folded portion 231 of separator 230 can be formed when bending electrode assembly holder 600.

Electrode assembly holder 600 is composed of a resin, for example. As the resin of electrode assembly holder 600, polyethylene (PE) or polypropylene (PP) is preferably used. However, the resin of electrode assembly holder 600 is not limited thereto, and it is possible to use: an olefin-based resin such as polymethylpentene (PMP); a polyester-based resin such as polyethylene terephthalate (PET) and polyethylene naphthalate (PEN); a fluororesin such as polytetrafluoroethylene (PTFE); an acrylic resin (PMMA); polyimide (PI); polyphenylene ether (PPE); triacetate (TAC); a polyphenylene sulfide resin (PPS); polycarbonate (PC); nylon; or the like, for example. Electrode assembly holder 600 may be porous or non-porous.

Electrode assembly holder 600 may be formed to have a prismatic tubular shape, or may be formed to have a box shape or a pouch shape. Electrode assembly holder 600 is preferably provided with a region through which an electrolyte solution and a gas can pass. The region through which the electrolyte solution and the gas can pass preferably faces gas-discharge valve 150. Thus, the gas generated in electrode assembly 200 can be facilitated to be discharged to the outside of case 100 through gas-discharge valve 150.

As shown in Fig. 21, redundant portions 231A, 232A of separator 230 reach edge ends 2521, 2522 of main surface 252 from edge ends 2511, 2512 of main surface 251 respectively. The creepage distances (L1, L2) of redundant portions 231A, 232A are longer than the shortest distances (T1, T2) from edge ends 2511, 2512 of main surface 251 to edge ends 2521, 2522 of main surface 252 in the Y direction. Preferably, each of (L1-T1)/T1 and (L2-T2)/T2 is about 0.1 or more (more preferably about 0.2 or more, and further preferably about 0.4 or more) and about 1.5 or less (more preferably about 1.1 or less, and further preferably about 0.7 or less).

The thickness (T2) of electrode assembly 200 is, for example, about 11 mm or more (preferably about 13 mm or more) and about 16 mm or less (preferably about 14 mm or less).

As described above, when the battery assembly is formed by restraining case 100 having the prismatic shape in the Y direction, redundant portions 231A, 232A of separator 230 included in electrode assembly 200 may have an unintentional influence on electrode assembly 200. In particular, when a step is formed in main surface 250 of electrode assembly 200, variation in pressure load is likely to occur. Thus, when variation in potential within positive electrode plate 220 of electrode assembly 200 occurs, the precipitation of metal (precipitation of lithium in a lithium ion battery) may occur.

On the other hand, in secondary battery 1 according to the present embodiment, by providing folded portions 231, 232 of separator 230 so as to face second side surface portions 112 of case main body 110, it is possible to prevent redundant portions 231A, 232A of separator 230 from being located on main surface 250 of electrode assembly 200 to have an unintentional influence on electrode assembly 200. As a result, the precipitation of lithium (precipitation of metal) can be effectively suppressed.

Moreover, vibration resistance of secondary battery 1 can be improved by a cushioning effect of each of folded portions 231, 232 formed at the end portions in the Z direction.

Further, the inner space of case 100 as formed by folded portions 231, 232 each extending in the X direction may serve as a path for the electrolyte solution. Thus, impregnation of electrode assembly 200 with the electrolyte solution is improved.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery (1) comprising:
an electrode assembly (200) including a first electrode (210), a second electrode (220) having a polarity different from a polarity of the first electrode (210), and a separator (230) provided between the first electrode (210) and the second electrode (220); and
an exterior container (100) that has a prismatic shape and that accommodates the electrode assembly (200), wherein
the exterior container (100) has a pair of first surfaces (111), a pair of second surfaces (112) substantially orthogonal to the first surfaces (111), and a pair of third surfaces (120, 130) substantially orthogonal to the first surfaces (111) and the second surfaces (112), and an area of each of the first surfaces (111) is larger than each of an area of each of the second surfaces (112) and an area of each of the third surfaces (120, 130),
the first surface (111) has a substantially rectangular shape including a pair of first end sides (101) each extending in a first direction and a pair of second end sides (102) each extending in a second direction substantially orthogonal to the first direction,
the electrode assembly (200) has a first main surface (251) and a second main surface (252) that respectively face the pair of first surfaces (111), and
the separator (230) has a folded portion (231, 232) extending in a form of a strip in the first direction in a vicinity of at least one of the pair of first end sides (101), and the folded portion (231, 232) is provided to face a corresponding one of the second surfaces (112) of the exterior container (100).

2. The secondary battery (1) according to claim 1, wherein the folded portion (231, 232) is provided in a vicinity of each of the pair of first end sides (101).

3. The secondary battery (1) according to claim 1 or 2, wherein
the separator (230) includes an outer peripheral portion provided outside the first electrode (210) and the second electrode (220),
the outer peripheral portion has a redundant portion (231A, 232A) that reaches an edge end of the second main surface (252) from an edge end of the first main surface (251) of the electrode assembly (200) and that has a creepage distance longer than a shortest distance from the edge end of the first main surface (251) to the edge end of the second main surface (252) in the first direction, and
the folded portion (231, 232) is formed by bending the redundant portion (231A, 232A).

4. The secondary battery (1) according to any one of claims 1 to 3, wherein the pair of first end sides (101) are long sides.

5. The secondary battery (1) according to any one of claims 1 to 4, wherein the electrode assembly (200) has an electrode tab (200A, 200B) at a position facing each of the pair of second end sides (102).

6. The secondary battery (1) according to any one of claims 1 to 5, wherein the electrode assembly (200) is a stacked type electrode assembly (200).

7. The secondary battery (1) according to claim 6, wherein the separator (230) is folded in a meandering manner.

8. A method of manufacturing a secondary battery (1), the method comprising:
preparing an electrode assembly (200) that has a first main surface (251) and a second main surface (252) and that includes a first electrode (210), a second electrode (220) having a polarity different from a polarity of the first electrode (210), and a separator (230) provided between the first electrode (210) and the second electrode (220); and
accommodating the electrode assembly (200) into an exterior container (100), wherein
the exterior container (100) has a prismatic shape, and has a pair of first surfaces (111), a pair of second surfaces (112) substantially orthogonal to the first surfaces (111), and a pair of third surfaces (120, 130) substantially orthogonal to the first surfaces (111) and the second surfaces (112), and an area of each of the first surfaces (111) is larger than each of an area of each of the second surfaces (112) and an area of each of the third surfaces (120, 130),
the first surface (111) has a substantially rectangular shape including a pair of first end sides (101) each extending in a first direction and a pair of second end sides (102) each extending in a second direction substantially orthogonal to the first direction,
the preparing the electrode assembly (200) includes bending the separator (230) so as to form a folded portion (231, 232) extending in a form of a strip in the first direction in a vicinity of at least one of the pair of first end sides (101), and
the accommodating the electrode assembly (200) into the exterior container (100) includes inserting the electrode assembly (200) into the exterior container (100) such that the first main surface (251) and the second main surface (252) face the pair of first surfaces (111) respectively and the folded portion (231,232) faces a corresponding one of the second surfaces (112).

9. The method of manufacturing the secondary battery (1) according to claim 8, further comprising bending an insulating member (600) disposed outside the electrode assembly (200), wherein
when bending the insulating member (600), the folded portion (231, 232) is formed.

10. The method of manufacturing the secondary battery (1) according to claim 9, further comprising bending the separator (230) before bending the insulating member (600).
